# EUROPÄISCHE PATENTSCHRIFT

(11) **EP 0 313 956 B1**
(45) Veröffentlichungstag und Bekanntmachung des Hinweises auf die Patenterteilung: **01.09.1993**
(21) Anmeldenummer: 88117285.2
(22) Anmeldetag: 18.10.1988
(51) Int. Cl.: G02B 6/42, H01L 33/00

(54) **Optoelektrisches Bauelement und Verfahren zu dessen Herstellung**
Optoelectric component and manufacturing method therefore
Elément opto-electrique et méthode pour sa fabrication

(30) Priorität: 24.10.1987 DE 3736026
(43) Veröffentlichungstag der Anmeldung: 03.05.1989
(73) Patentinhaber: Alcatel SEL Aktiengesellschaft, D-70435 Stuttgart (DE); ALCATEL N.V., NL-1077 XX Amsterdam (NL)
(72) Erfinder: Ulmer, Michael, D-7000 Stuttgart 30 (DE); Luz, Gerhard, D-7000 Stuttgart 40 (DE); Robisch, Oliver, D-7000 Stuttgart 31 (DE)
(74) Vertreter: Gähr, Hans-Dieter, Dipl.-Ing. (FH)

(56) Entgegenhaltungen:
- DE-A- 3 004 379
- FR-A- 2 328 973
- GB-A- 2 046 472
- US-A- 4 136 357

## Beschreibung

Die Erfindung betrifft ein Bauelement der im Oberbegriff des Anspruchs 1 näher bezeichneten Ausführung. Derartige Bauelemente werden insbesondere in Systemen der optischen Nachrichten-Übermittlungstechnik verwendet.

Aus der DE-OS 30 46 415 ist ein als Lasermodul ausgeführtes Bauelement bekannt, dessen Basisteil aus dem Kopfende eines Bolzens besteht. Der Bolzen weist stirnseitig einen im Querschnitt reduzierten Fortsatz auf, der als Fuß für einen am Fortsatzende angeordneten Laser dient. Neben diesem Fortsatz ist mit Abstand ein weiterer säulenartiger Fuß befestigt. Dieser trägt eine Lötzinnperle mit darin eingebettetem Lichtwellenleiter. Beide Fußanordnungen umschließt ein zylindrisches Metallgehäuse, das endseitig mittels einer Kappe abgedeckt ist. Das Gehäuse weist unter anderem eine seitliche Öffnung auf, in welcher eine Flanschhülse befestigt ist. Durch diese Flanschhülse hindurch erstreckt sich der Lichtwellenleiter bis vor den Laser. Das abstehende Ende der Flanschhülse ist durch geschmolzenes Lot hermetisch abgedichtet. Hinter dem Laser weist die Seitenwand des Gehäuses eine weitere Öffnung auf, in die ein Sockelteil mit daruf fixierter Fotodiode eingesetzt ist.

Das Festlegen des Glasfaserendes geschieht bei noch offenem Gehäuse und eingeschaltetem Laser. Das zuvor metallisierte Ende des Lichtwellenleiters wird hierbei durch die Bohrung eines noch kalten Lötzinnkörpers gesteckt und der Körper auf dem Säulenfuß deponiert. Ein den Lichtwellenleiter haltendes Werkzeug, das von einem Mikromanipulator gesteuert wird, justiert den Lichtwellenleiter, bis die an seinem freien Ende gemessene Lichtleistung einen Optimalwert erreicht. Dann wird der aus einem niedrigschmelzenden Zinn bestehende Körper beispielsweise mittels einer einen separaten Laser enthaltenden Lötvorrichtung geschmolzen, wobei sich eine Lötperle ausbildet, die nach dem Erstarren das Glasfaserende auf dem Säulenfuß in der justierten Lage fixiert.

Fertigungstechnisch ist das Lasermodul nur mit relativ großem Aufwand herstellbar. Es werden eine größere Anzahl verhältnismäßig kompliziert ausgebildete Einzelteile verwendet, deren Produktion und Montage kostenintensiv sind.

Ein bereits einfacher herstellbares optoelektrisches Bauelement (DE-OS 37 32 433), verwendet als Basisteil einen Metallblock. Dieser besteht aus einer Basisplatte mit einem stegförmigen Träger, auf dem eine Laserdiode angeordnet ist. Hinter dem Träger ist eine Montagefläche für die Ansteuer- und Regelschaltung der Laserdiode und vor dem Träger ein Befestigungsblock zur Halterung einer Faserendhülse vorgesehen. Die Faserendhülse enthält den mit dem Faserende auf die Laserdiode justierten Lichtwellenleiter, der dem Gehäuseinnern durch eine seitliche Wandöffnung zugeführt ist. Der Metallblock sitzt auf einem plattenförmigen Peltierelement, das auf dem Boden eines flachen, im querschnitt rechteckigen Metallgehäuses befestigt ist. Neben dieser Anordnung durchsetzen den Gehäuseboden in Preßglas eingeschmolzene Anschlußstifte, deren innerhalb der Gehäusekapsel liegende Enden gebondete Drahtverbindungen zur Laserdiode und zu deren Ansteuer- und Regelschaltung aufweisen. Auch dieses Bauelement ist in der Herstellung noch immer aufwendig und teuer.

In der DE-A-3 004 379 ist ein bereits einfacher herstellbares optoelektrisches Bauelement beschrieben, bei dem auf einem als Leiterrahmen bezeichneten, ebenen Basisteil eine Leuchtdiode angeordnet ist. Basisteil mit Leuchtdiode und das auf die Leuchtdiode ausgerichtete Faserende eines Lichtwellenleiters sind innerhalb eines aus zwei Hälften zusammengefügten Gehäuses befestigt, aus dem mehrere Anschlußfahnen hervorstehen. Die Leuchtdiode ist auf dem Basisteil liegend fixiert, so daß deren aktive Fläche sich parallel zur Basisteilebene und der angekoppelte Lichtwellenleiter sich senkrecht dazu erstreckt. Ein individuelles Justieren des Lichtwellenleiter-Faserendes auf die Leuchtdiode ist nicht möglich, da an der einen Gehäusehälfte Paßstifte und am Basisteil sowie der anderen Gehäusehälfte, entsprechende Aufnahmen vorgesehen sind, die beim Zusammenfügen der Einzelteile selbsttätig eine präzise Faserankopplung bewirken sollen.

Ein weiteres optoelektrisches Bauelement ist aus der FR-A-2 328 973 bekannt. Es besteht aus einem streifenförmigen, metallenen Gehäuse mit zwei sich von einem Mittelteil aus in entgegengesetzte Richtungen erstreckenden Befestigungslaschen. Im Mittelteil sind die optoelektrischen Komponenten angeordnet und durch einen aufgesetzten Deckel lichtundurchlässig verkapselt. Bei den optoelektrischen Komponenten handelt es sich um eine auf einem Sockel fixierte Laserdiode, zwei an die emittierenden Flächen der Laserdiode angekoppelte Lichtwellenleiter, deren Faserenden je eine im Winkel von 45° zur Längsachse angeordnete Stirnfläche aufweisen und eine vom Gehäuse elektrisch isolierte Anschlußzunge, welche durch einen Draht elektrisch mit der Laserdiode verbunden ist. Die aus dem Gehäuse hervorstehende Anschlußzunge und die abgehenden Lichtwellenleiter erstrecken sich bei dieser Bauweise quer zur Längsachse des Bauelements.

Der Erfindung liegt die Aufgabe zugrunde, ein für die Großserienfertigung geeignetes optoelektrisches Bauelement zu konzipieren und hierfür ein möglichst billiges Herstellungsverfahren anzugeben. Diese Aufgabe wird erfindungsgemäß durch die im Anspruch 1 angegebenen konstruktiven Merkmale und die im Anspruch 5 angegebenen Verfahrensmerkmale gelöst. Vorteilhafte Ausgestaltungen des Bauelementes und zweckmäßige Maßnahmen bei der Durchführung des Verfahrens sind den Unteransprüchen zu entnehmen.

Das vorgeschlagene optoelektrische Bauelement weist verschiedene Vorzüge auf. Es ist fertigungstechnisch einfach und mit niedrigen Gestehungskosten produzierbar. Der als Basis des Bauelementes dienende Trägerstreifen kann allein durch Stanzen und Prägen hergestellt werden. Außerdem ist er weitgehend eben, von allen Seiten offen und gestattet daher ein ungehindertes Montieren und Justieren der wenigen Einzelteile. Die freie Zugänglichkeit der Montageflächen erlaubt somit eine automatisierte Fertigung mit relativ einfachen Bewegungsabläufen. Dafür können herkömmliche Werkzeuge und Vorrichtungen verwendet werden. Die Verkapselungsmethode des Vergießens oder Umspritzens ist außerdem erheblich billiger als die bislang verwendeten teueren Metallgehäuse mit eingeglasten Anschlußstiften.

Die Erfindung wird anhand eines in Zeichnungen dargestellten Ausführungsbeispiels wie folgt näher beschrieben. Es zeigen:
- Fig 1: ein optoelektrisches Bauelement in perspektivischer Ansicht;
- Fig. 2a: den Ausschnitt eines Metallbandes mit im Umriß freigestanzten und geprägten Trägerstreifen in der Draufsicht;
- Fig. 2b: das Metallband der Fig. 2a gemäß Schnittlinie A-B;
- Fig. 3a: das Metallband der Fig. 2a, mit einer jeweils zwischen zwei Trägerstreifen angespritzten Haltestrebe in der Draufsicht;
- Fig. 3b: das Metallband der Fig. 3a gemäß Schnittlinie C-D;
- Fig. 4: das Metallband der Fig. 3a mit an jeweils einer Längsseite der Trägerstreifen abgetrennten Anschlußfahnen in der Draufsicht;
- Fig. 5a: das Metallband der Fig. 4 mit vollständig montierten Trägerstreifen in der Draufsicht;
- Fig. 5b: das Metallband der Fig. 5a mit einem längsgeschnittenen Trägerstreifen in der Seitenansicht;
- Fig. 6: das Metallband der Fig. 5a mit vollständig umspritzten Trägerstreifen in der Draufsicht.

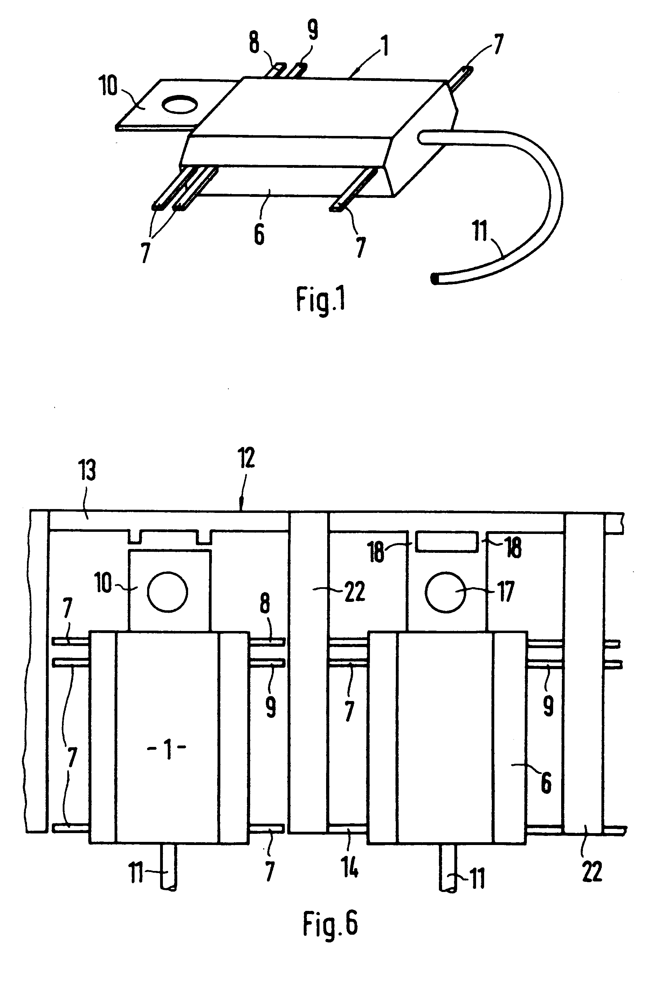

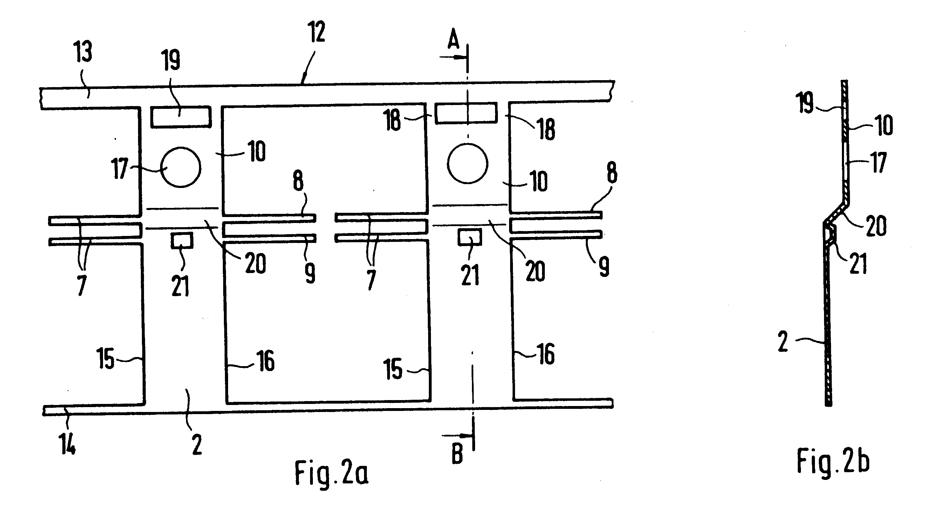

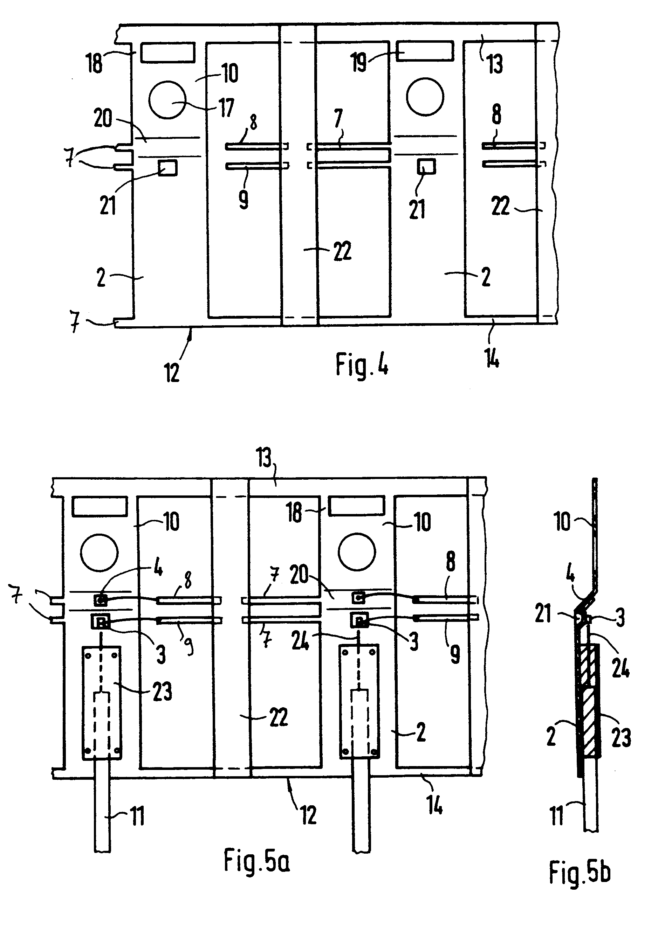

In Fig. 1 ist das optoelektrische Bauelement insgesamt mit 1 bezeichnet. Es besteht im wesentlichen aus einem aus Blech gestanzten Trägerstreifen 2 (Fig.2), auf dem eine Foto- oder Laserdiode 3 und ggf. eine Monitordiode 4 sowie eine an die aktive Fläche der Foto- oder Laserdiode gekoppelte Glasfaser angeordnet sind (Fig. 5a, 5b). Diese Anordnung ist im lichtundurchlässigem Kunststoff 6 eingebettet. Der Kunststoff bildet einen quaderartigen mechanisch robusten Körper, aus dem die Enden mehrerer Anschlußfahnen 7, 8, 9, eine Wärmeleitplatte 10 und der abgehende Lichtwellenleiter 11 hervorstehen.

Zur Herstellung des optoelektrischen Bauelementes 1 wird ein Metallband 12 einem Werkzeug mit mehreren Bearbeitungsstationen zugeführt (nicht dargestellt) und der Trägerstreifen 2 so im Umriß freigestanzt, daß er zunächst über äußere Randstreifen 13, 14 mit dem Metallband verbunden bleibt. Durch taktweisen Vorschub des Metallbandes 12 entsteht eine leiterförmige Bandkonfiguration, deren Sprossen die Trägerstreifen 2 bilden. Wie die Fig. 2a zeigt, werden beim Stanzen die Anschlußfahnen 7, 8, 9 freigeschnitten, welche in der Blechebene liegen, Abstand zueinander haben und auf beiden Längsseiten 15, 16 im rechten Winkel vom Trägerstreifen 2 abstehen. Außerdem kann zugleich ein Befestigungsloch 17 in den oberen, die Wärmeleitplatte 10 darstellenden Teil des Trägerstreifens 2 und bedarfsweise eine zwei Trennstege 18 bildende Ausnehmung 19 am Ende der Wärmeleitplatte 10 ausgestanzt werden.

Die Wärmeleitplatte 10 stellt einen Teil des Trägerstreifens 2 dar, während der andere Teil als Basis für die Montage der Faserankopplung dient. Hierfür wird bei dem als Lasermodul ausgebildeten Bauelement 1 in einem weiteren Fertigungsschritt im Übergangsbereich zur Wärmeleitplatte 10 eine schräge Montagefläche 20 für die Monitordiode 4 und davor ein Sockel 21 für die Montage der Foto- oder Laserdiode 3 angeprägt. Die Montagefläche für die Foto- oder Laserdiode 3 verläuft parallel zur Blechebene des Trägerstreifens 2. Die zwischen dem Sockel 21 und der Wärmeleitplatte 10 vorgesehene Montagefläche 20 für die Monitordiode 4 und die Blechebene des Trägerstreifens 2 schließen dagegen einen Winkel von 135° ein, so daß die aktive Fläche der fixierten Monitordiode 4 in einem Winkel von 45° zur Rückseite der fixierten Laserdiode 3 steht.

Der Trägerstreifen 2 ist über seine Gesamtlänge vorzugsweise gleich breit und der Sockel 21, die Montagefläche 20 sowie das Befestigungsloch 17 sind auf der Längsachse des Trägerstreifens hintereinander angeordnet. Der Sockel 21 und die Montagefläche 20 werden beim Prägen von der Blechunterseite nach oben durchgedrückt, wobei der Sockel 21 z.B. die Form eines Pyramidenstumpfes erhält (Fig. 2b) und die Montagefläche 20 für die Monitordiode 4 Wandungsteil einer im Querschnitt dreieckigen Blechnase sein kann. Bei dem in den Zeichnungen dargestellten Ausführungsbeispiel ist die Montagefläche 20 für die Monitordiode 4 durch eine zweifache Abbiegung des Trägerstreifens 2 hergestellt, derart, daß der Faserankopplungsteil und die Wärmeleitplatte 10 des Trägerstreifens 2 eine Stufe bilden.

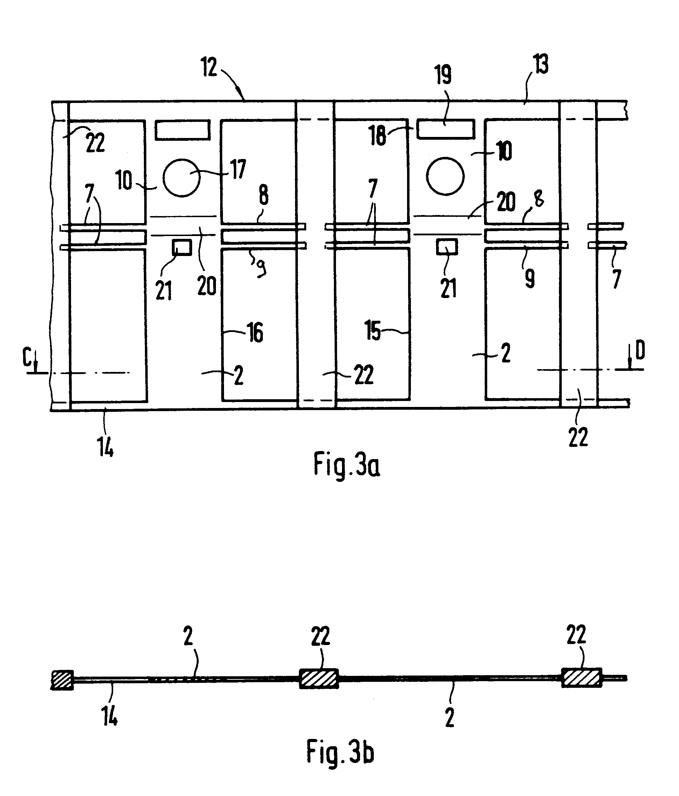

Nach dem Freistanzen und Prägen des Trägerstreifens 2 werden relativ kurze Endabschnitte der Anschlußfahnen 7 dieses Trägerstreifens zusammen mit den ihnen zugekehrten Endabschnitten der Anschlußfahnen 8, 9 des zuvor fertiggestellten Trägerstreifens unter Einschluß der Randstreifen 13, 14 des Metallbandes 12 so mit Kunststoff umspritzt, daß eine mechanisch stabile Haltestrebe 22 entsteht, die mittig zwischen zwei benachbarten Trägerstreifen 2 liegt (Fig. 3a, 3b). Anschließend werden die zur Verbindung mit der Foto-oder Laserdiode 3 und der Monitordiode 4 vorgesehenen Anschlußfahnen 8, 9 jeweils durch Wegstanzen eines kurzen Basisabschnittes vom Trägerstreifen 2 räumlich getrennt wie Fig. 4 zeigt.

Im weiteren Verlauf der Fertigung des Bauelementes 1 werden nun die Monitordiode 4 und die Laserdiode 3 mittels Kleben oder Löten auf den vorgesehenen Plätzen der Montagefläche 20 und des Sockels 21 fixiert und die Drahtverbindungen zu den Anschlußfahnen 8, 9 durch Bonden hergestellt.

Separat hierzu wird der vorpräparierte Lichtwellenleiter 11 in einer Halterung 23 befestigt. Die Halterung 23 kann beispielsweise eine metallene, den Lichtwellenleiter 11 kabelschellenartig übergreifende Faserhalteplatte oder eine Faserendhülse sein, in welche der Lichtwellenleiter 11 so eingeklebt ist, daß das abgemantelte Faserende 24 daraus hervorsteht.

Die derart komplettierte Anordnung wird sodann dem Trägerstreifen 2 zugeführt und auf dem vorgesehenen Montageplatz abgesetzt. Hierbei erfolgt bereits eine grobe Ausrichtung der Glasfaser auf die Foto- oder Laserdiode 3, da Sockelhöhe, Montageebene und Faserhalterung so aufeinander abgestimmt sind, daß das Faserende 24 und die aktive Diodenfläche sich auf gleicher Höhe befinden. Nach dem sich daran anschließenden, in bekannter Weise während des Betriebes erfolgenden Justieren bis zur optimalen Lichtübertragung, wird die Halterung 23 auf dem Trägerstreifen 2 fixiert und wenigstens der das Faserende 24 sowie die Laser- und Monitordiode 3, 4 einschließende Kopplungsbereich dadurch geschützt, daß er zuerst mit transparentem Kunststoff vergossen und der Trägerstreifen 2 danach unter Einschluß der transparenten Kapsel mit einem lichtundurchlässigen Kunststoff 6 umspritzt wird.

Das Fixieren der vorzugsweise aus Stahl hergestellten Faser-Halterung 23 geschieht bei ebenfalls aus Stahl bestehendem Trägerstreifen 2 z.B. mittels Laserschweißen. Ist der Trägerstreifen 2 aus Kupfer-oder Messingblech gestanzt, wird die Halterung z.B. mittels Löten oder Kleben daran befestigt. Eine weitere Möglichkeit die Faserankopplung vorzunehmen besteht darin, daß das abgemantelte Faserende 24 in der optimal einjustierten Lage mit optischer Vergußmasse direkt auf die aktive Laserfläche geklebt und der Lichtwellenleiter 11 gleichzeitig mit Kleber unmittelbar auf dem Trägerstreifen 2 befestigt wird.

Bei einem abgewandelten Herstellungsverfahren werden Faserankopplung, Laser- und Monitordiode 3, 4 mit einer Haube z.B. aus Kunststoff abgedeckt und der Trägerstreifen 2 unter Einschluß des unter der Haube gebildeten Hohlraumes mit geschwärztem Kunststoff 6 vergossen.

Ohne Einbettung bleiben die verschiedenen Anschlußfahnen 7, 8, 9, die Wärmeleitplatte 10, der abgehende Lichtwellenleiter 11 und der sich zwischen den Längsseiten 15, 16 benachbarter Trägerstreifen 2 unmittelbar erstreckende Randstreifen 14 des Metallbandes 12.

Im letzten Fertigungsschritt wird das Bauelement 1 vom Metallband 12 getrennt. Hierbei werden die Anschlußfahnen 7, 8, 9 und der Randstreifen 14 auf beiden Längsseiten nahe den Haltestreben 22 und die Trennstege 18 am Ende der Wärmeleitplatte 10 durchschnitten (Fig. 6). Die Bänder des Randstreifens 14 bilden nun Anschlußfahnen 7, die weitere Masseverbindungen gestatten oder als rein mechanische Haltelappen für die Befestigung des Bauelementes 1 auf einer Montageplatte genutzt werden können.

## Patentansprüche

1. Optoelektrisches Bauelement (1) mit einem in zwei Abschnitte unterteilten Trägerstreifen (2), bei dem auf einem Sockel (21) eines ersten Abschnittes eine Foto- oder Laserdiode (3) und davor ein mit dem Faserende (24) auf die Diode (3) ausgerichteter Lichtwellenleiter (11) gehaltert ist, wobei der Trägerstreifen (2) mehrere Anschlußfahnen (7, 8, 9) hat, von denen wenigstens eine vom Trägerstreifen (2) elektrisch isoliert sowie durch einen Draht mit der Diode (3) elektrisch verbunden ist und wobei der Trägerstreifen (2) mit Ausnahme der Anschlußfahnenenden sowie des abgehenden Lichtwellenleiters (11) und des zweiten, eine Wärmeleitplatte (10) bildenden Abschnitts eine lichtundurchlässige Verkapselung aufweist, **dadurch gekennzeichnet** , daß der Trägerstreifen (2) mit der aus Foto- oder Laserdiode (3), dem Faserende (24) und ggf. einer Monitordiode (4) bestehenden Faserankopplung in einen aus lichtundurchlässigem Kunststoff (6) bestehenden Körper eingebettet ist, wobei der Kopplungsbereich durch Mittel gegen das Eindringen des lichtundurchlässigen Kunststoffs (6) geschützt ist.

2. Optoelektrisches Bauelement nach Anspruch 1, dadurch gekennzeichnet, daß bei Verwendung einer auf dem Sockel (21) sitzenden Laserdiode (3) der Trägerstreifen (2) hinter dem Sockel (21) eine stufenartige Abbiegung aufweist, die eine Montagefläche (20) bildet, auf der eine Monitordiode (4) fixiert ist.

3. Optoelektrisches Bauelement nach Anspruch 1 oder 2, dadurch gekennzeichnet, daß die Halterung (23) des Lichtwellenleiters (11) aus einer auf dem Trägerstreifen (2) befestigten Faserhalteplatte oder einer Faserendhülse besteht.

4. Optoelektrisches Bauelement nach Anspruch 1 oder 2, dadurch gekennzeichnet, daß bei der aus Foto- oder Laserdiode (3) und dem Faserende (24) des Lichtwellenleiters (11) bestehenden Faserankopplung das Faserende (24) direkt auf die aktive Fläche der Diode (3) und der Lichtwellenleiter (11) unmittelbar auf den Trägerstreifen (2) geklebt sind.

5. Verfahren zur Herstellung eines verkapselten optoelektrischen Bauelementes gemäß Anspruch 1, dadurch gekennzeichnet, daß zuerst der Trägerstreifen (2) mit den Anschlußfahnen (7, 8, 9) aus Blech gestanzt und der Sockel (21) mit einer parallel zur Blechebene des Trägerstreifens (2) verlaufenden Montagefläche für die Foto- oder Laserdiode (2) angeprägt wird, daß die Montagefläche anschließend mit der Diode (3) und der Trägerstreifen (2) mit dem Lichtwellenleiter (11) bestückt werden und eine Drahtverbindung von der Diode (3) zu einer vom Trägerstreifen (2) abgetrennten Anschlußfahne (9) hergestellt wird, daß danach das Faserende (24) auf die Laserdiode (3) justiert und anschließend fixiert wird, und daß dann der aus Faserende (24) und Foto- oder Laserdiode (3) bestehende Kopplungsbereich gegen Eindringen von lichtundurchlässigem Kunststoff (6) geschützt wird, mit dem die Anordnung ohne Einbettung der Anschlußfahnenenden, des abgehenden Lichtwellenleiters (11) und der Wärmeleitplatte (10) schließlich umspritzt wird.

6. Verfahren nach Anspruch 5, dadurch gekennzeichnet, daß bei Verwendung einer Laserdiode (3) beim Prägen des Sockels (21) eine mit der Blechebene des Trägerstreifens (2) einen Winkel von 135° einschließende, schräge Montagefläche (20) für die Monitordiode (4) mit angeprägt wird, daß die Montagefläche (20) anschließend mit der Monitordiode (4) bestückt und eine Drahtverbindung von der Monitordiode (4) zu einer vom Trägerstreifen (2) abgetrennten Anschlußfahne (8) hergestellt wird.

7. Verfahren nach Anspruch 5 oder 6, dadurch gekennzeichnet,
- daß aus einem Metallband (12) fortlaufend an Randstreifen (13, 14) und Trennstegen (18) zunächst miteinander verbunden bleibende Trägerstreifen (2) mit an den Längsseiten (15, 16) abstehenden Anschlußfahnen (7, 8, 9) freigestanzt werden,
- daß die Trägerstreifen (2) mittels Prägen einen Sockel (21) für die Laserdiode (3) und ggf. eine schräge Montagefläche (20) für die Monitordiode (4) erhalten,
- daß die freien Enden der sich gegenüberstehenden Anschlußfahnen (7, 8, 9) von zwei benachbarten Trägerstreifen (2) einschließlich der Randstreifen (13, 14) des Metallbandes (12) in eine Haltestrebe (22) aus Kunststoff eingespritzt werden,
- daß die Anschlußfahnen (8, 9) für die Foto- oder Laserdiode (3) und ggf. für die Monitordiode (4) durch Wegstanzen eines jeweils kurzen Basisabschnittes räumlich vom Trägerstreifen (2) getrennt werden,
- daß der Trägerstreifen (2) mit der Foto- oder Laserdiode (3) und ggf. mit der Monitordiode (4) bestückt und durch Bonden Drahtverbindungen zu den Anschlußfahnen (8, 9) hergestellt werden,
- daß der insoweit vervollständigten Anordnung ein separat vorpräparierter Lichtwellenleiter (11) zugeführt, und dessen Faserende (24) auf die aktive Fläche der Foto- oder Laserdiode (3) justiert und der Lichtwellenleiter (11) auf dem Trägerstreifen (2) fixiert wird,
- daß die aus der Foto- oder Laserdiode (3), dem Faserende (24) und ggf. der Monitordiode (4) bestehende Faserankopplung gegen Eindringen von lichtundurchlässigem Kunststoff (6) geschützt und der Trägerstreifen (2) unter Auslassung der Wärmeleitplatte (10) und der Enden der Anschlußfahnen (7, 8, 9) vollständig mit Kunststoff (6) umspritzt wird, und
- daß die Trennstege (18) an der Wärmeleitplatte (10) sowie die Anschlußfahnen (7, 8, 9) und der Randstreifen (14) nahe den Haltestreben (22) durchgeschnitten werden.

8. Verfahren nach Anspruch 7, dadurch gekennzeichnet, daß der Lichtwellenleiter (11) und das Faserende (24) vor dem Justieren auf die Foto- oder Laserdiode (3) in einer separaten Halterung (23) befestigt werden und die Halterung nach beendeter Justage auf dem Trägerstreifen (2) fixiert wird.

9. Verfahren nach Anspruch 7, dadurch gekennzeichnet, daß vor dem Umspritzen des Trägerstreifens (2) mit lichtundurchlässigem Kunststoff (6) der Faserankopplungsbereich in transparenten Kunststoff eingebettet wird.

10. Verfahren nach Anspruch 7, dadurch gekennzeichnet, daß vor dem Umspritzen des Trägerstreifens (2) mit lichtundurchlässigem Kunststoff (6) der Faserankopplungsbereich mit einer Haube abgedeckt wird.

## Claims

1. An optoelectronic component (1) with a lead frame (2) divided into two sections wherein a photodiode or laser diode (3) is fixed on a mount (21) of a first section and an optical waveguide (11) having its fiber end (24) aligned with the diode (3) is fixed in front of the diode (3), wherein the lead frame (2) has several leads (7, 8, 9) of which at least one is electrically isolated from the lead frame (2) and electrically connected by a wire to the diode (3), and wherein the lead frame (2), with the exception of the lead ends as well as of the outgoing optical waveguide (11) and the second section, which forms a heat-conducting plate (10), is provided with an opaque encapsulation,
**characterized in** that the lead frame (2) with the fiber-coupling assembly, consisting of the photodiode or laser diode (3), the fiber end (24), and a monitor diode (4) if necessary, is encapsulated in a body made of opaque plastic (6), with the coupling region protected by means preventing the ingress of the opaque plastic (6).

2. An optoelectronic component as claimed in claim 1, characterized in that if a laser diode (3) is seated on the mount (21), the lead frame (2) has behind the mount (21) a steplike bend forming a mounting surface (20) on which a monitor diode (4) is fixed.

3. An optoelectronic component as claimed in claim 1 or 2, characterized in that the holder (23) for the optical waveguide (11) is constituted by a fiber-holding plate mounted on the lead frame (2) or by a fiber ferrule.

4. An optoelectronic component as claimed in claim 1 or 2, characterized in that if the fiber-coupling assembly consists of the photodiode or laser diode (3) and the fiber end (24) of the optical waveguide (11), the fiber end (24) is cemented directly onto the active surface of the diode (3), and the optical waveguide (11) onto the lead frame (2).

5. A method of manufacturing an encapsulated optoelectronic component as claimed in claim 1, characterized in that first the lead frame (2) with the leads (7, 8, 9) is stamped from metal sheet and the mount (21), with a mounting surface for the photodiode or laser diode (3) extending parallel to the metal-sheet plane of the lead frame (2), is embossed, that the mounting surface is then fitted with the diode (3), and the lead frame (2) with the optical waveguide (11), and a wire connection is established from the diode (3) to a lead (9) separated from the lead frame (2), that thereafter the fiber end (24) is aligned with the laser diode (3) and subsequently fixed, and that the coupling region, consisting of the fiber end (24) and the photodiode or laser diode (3), is then protected against the ingress of opaque plastic (6) in which the arrangement is finally encapsulated without embedding the lead ends, the outgoing optical waveguide (11), and the heat-conducting plate (10).

6. A method as claimed in claim 5, characterized in that if a laser diode (3) is used, an inclined mounting surface (20) for the monitor diode (4) which makes an angle of 135^{o} with the metal-sheet plane of the lead frame (2) is formed simultaneously with the embossing of the mount (21), and that the mounting surface (20) is subsequently fitted with the monitor diode (4) and a wire connection is established from the monitor diode (4) to a lead (8) separated from the lead frame (2).

7. A method as claimed in claim 5 or 6, characterized in
- that lead frames (2) having leads (7, 8, 9) protruding from the long sides (15, 16) thereof are continuously stamped from a metal strip (12), with the lead frames (2) remaining interconnected for the time being via edge portions (13, 14) and link portions (18),
- that the lead frames (2) are provided with a mount (21) for the laser diode (3) and, if necessary, with an inclined mounting surface (20) for the monitor diode (4) by embossing,
- that the free ends of the opposed leads (7, 8, 9) of two adjacent lead frames (2) and parts of the edge portions (13, 14) of the metal strip (12) are surrounded by molded plastic material forming a holding strut,
- that the leads (8, 9) for the photodiode or laser diode (3) and the monitor diode (4), if present, are spatially separated from the lead frame (2) by blanking away short base sections,
- that the lead frame (2) is fitted with the photodiode or laser diode (3) and, if necessary, the monitor diode (4), and wire connections are made to the leads (8, 9) by bonding,
- that a separately prepared optical waveguide (11) is introduced into this arrangement, that the fiber end (24) of this optical waveguide (11) is aligned with the active surface of the photodiode or laser diode (3), and that the optical waveguide (11) is fixed on the lead frame (2),
- that the fiber-coupling assembly, consisting of the photodiode or laser diode (3), the fiber end (24), and the monitor diode (4), if present, is protected against the ingress of opaque plastic (6), and the lead frame (2) is encapsulated in plastic (6) with the exception of the heat-conducting plate (10) and the ends of the leads (7, 8, 9), and
- that the link portions (18), the leads (7, 8, 9), and the edge portion (14) are cut through, with the leads (7, 8, 9) and the edge portion (14) being cut through near the holding struts (22).

8. A method as claimed in claim 7, characterized in that the optical waveguide (11) and the fiber end (24) are fixed in a separate holder (23) before being aligned with the photodiode or laser diode (3), and that after completion of the alignment, the holder is fixed on the lead frame (2).

9. A method as claimed in claim 7, characterized in that before the lead frame (2) is encapsulated in opaque plastic (6), the coupling region is embedded in transparent plastic.

10. A method as claimed in claim 7, characterized in that before the lead frame (2) is encapsulated in opaque plastic (6), the coupling region is covered with a hood.

## Revendications

1. Elément opto-électrique (1) comportant un ruban support (2) divise en deux portions, élément dans le cas duquel une photo-diode ou une diode laser (3) est montée sur une douille (21) d'une première portion et dans le cas duquel une fibre optique (11) alignée, par l'extrémité (24) de la fibre, sur la diode (3) est montée en amont, élément dans le cas duquel le ruban support (2) présente plusieurs cosses de bornage (7, 8, 9) dont au moins l'une est électriquement isolée d'avec le ruban support (2) et électriquement reliée, par un fil conducteur, avec la diode (3), et dans le cas duquel le ruban support (2) présente un encapsulage non transparent à la lumière, à l'exception des extrémités des cosses de bornage ainsi que de la fibre optique (11) qui part du ruban support et de la seconde portion de ce ruban support, formant plaquette conductrice de la chaleur (10),
élément caractérisé par le fait que le ruban support (2) est, avec le couplage à la fibre, constitué de la photodiode ou de la diode laser (3), de l'extrémité (24) de la fibre et éventuellement d'une diode de surveillance (4), enrobé dans une masse constituée d'un plastique (6) non transparent à la lumière, la sone du couplage étant protégée par des moyens contre la pénétration de la masse plastique non transparente.

2. Elément opto-électrique selon la revendication 1, caractérisé par le fait que, dans le cas de l'emploi d'une diode laser (3) montée sur la douille (21), le ruban support (12) présente, derrière la douille (21), un pliage en forme de décrochement qui forme une surface de montage (20) sur laquelle est fixée une diode de surveillance (4).

3. Elément opto-électrique selon la revendication 1 ou 2, caractérisée par le fait que la monture (23) de la fibre optique (11) est constituée d'une plaquette de maintien de la fibre ou d'une douille d'extrémité de fibre fixée sur le ruban support (2).

4. Elément opto-électrique selon la revendication 1 ou 2, caractérisé par le fait qu'en ce qui concerne le couplage avec la fibre, constitué de la photodiode ou de la diode laser (3) et de l'extrémité (24) de la fibre optique (11), l'extrémité (24) de la fibre est directement collée sur la surface active de la diode (3) et la fibre optique (11) est directement collée sur le ruban support (2).

5. Procédé de fabrication d'un élément opto-électrique encapsulé selon la revendication 1, caractérisé par le fait que l'on découpe tout d'abord dans un feuillard le ruban support (2) avec les cosses de bornage (7, 8, 9) puis que l'on réalise par estampage la douille (21) avec une surface de montage, orientée parallèlement au plan de feuillard du ruban support (2) pour la photodiode ou la diode laser (2), par le fait qu'ensuite on garnisse la surfae de montage avec la diode (3) et le ruban support (2) avec la fibre optique (11) et que l'on réalise une liaison, par fil conducteur entre la diode (3) et une cosse de bornage (9), séparée d'avec le ruban support (2), par le fait qu'ensuite on ajuste, puis que l'on fixe, l'extrémité (24) de la fibre sur la diode laser (3) et par le fait qu'ensuite on protège la zone du couplage, constituée de l'extrémité (24) de la fibre et de la photodiode ou de la diode laser (3), à l'égard de la pénétration de la masse plastique (6), non transparente à la lumière, dont on enrobe finalement le dispositif par injection, sans y enrober les extrémités de cosses de bornage, la fibre optique (11) qui part du ruban support et la plaquette conductrice de la chaleur (10).

6. Procédé selon la revendication 5, caractérisé par le fait que si l'on emploie une diode laser (3), lors de l'estampage de la douille (21), on réalise en même temps par estampage, pour la diode de surveillance (4), une surface de montage oblique (20) qui fait avec le plan de feuillard du ruban support (2) un angle de 135°, et par le fait que l'on garnisse ensuite la surface de montage (20) avec la diode de surveillance (4) et que l'on réalise une liaison par fil conducteur entre la diode de surveillance (4) et une cosse de bornage (8) séparée d'avec le ruban support (2).

7. Procédé selon la revendication 5 ou 6, caractérisé
- par le fait qu'on libère par découpage en continu d'un feuillard métallique (12) des rubans supports (2) qui restent tout d'abord reliés les uns aux autres par des barrettes de bordure (13, 14) et des barrettes de séparation (18) et qui présentent des cosses de bornage (7, 8, 9) qui partent des côtés longitudinaux (15, 16),
- par le fait que, par estampage, on réalise sur les rubans supports (2) une douille (21) pour la diode laser (3) et éventuellement une surface de montage inclinée (20) pour la diode de surveillance (4),
- par le fait que l'on enrobe, par injection de plastique, pour donner un barreau de maintien (22), les extrémités libres des cosses de bornage (7, 8, 9), situées en face l'une de l'autre, de deux rubans supports voisins (2) y compris les barrettes de bordure (13, 14) du feuillard métallique (12),
- par le fait que l'on sépare physiquement d'avec le ruban support (2) les cosses de bornage (8, 9) prévues pour la photodiode ou la diode laser (3) et éventuellement pour la diode de surveillance (4) en rognant chaque fois une courte portion de base,
- par le fait que l'on garnisse le ruban support (2) avec la photodiode ou la diode laser (3) et éventuellement avec la diode de surveillance (4) et que, par soudage, on réalise des liaisons par fil conducteur, avec les cosses de bornage (8, 9),
- par le fait qu'au dispositif ainsi complété jusqu'ici on amène une fibre optique (11) antérieurement préparée à part et que l'on ajuste son extrémité (24) sur la surface active de la photodiode ou de la diode laser (3) et que l'on fixe la fibre optique (11) sur le ruban support (2),
- par le fait que l'on protège à l'égard de la pénétration de la masse plastique (6) non transparente à la lumière le couplage de la fibre, constitué de la photodiode ou de la diode laser, de l'extrémité (24) de la fibre et éventuellement de la diode de surveillance (4), et que l'on enrobe complètement par injection d'une masse plastique (6) le ruban support (2) à l'exception de la plaquette conductrice de la chaleur (10) et les extrémités des cosses de raccordement (7, 8, 9), et
- par le fait que l'on découpe les barrettes de séparation (18) sur la plaquette conductrice de la chaleur (10) ainsi que les cosses de raccordement (7, 8, 9) et la barrette de bordure (14) près du barreau de maintien (22).

8. Procédé selon la revendication 7, caractérisé par le fait qu'avant l'ajustement on fixe la fibre optique (11) et l'extrémité (24) de la fibre sur la photodiode ou la diode laser (3) dans une monture distincte (23) puis qu'une fois l'ajustement terminé, on fixe la monture sur le ruban support (2).

9. Procédé selon la revendication 7, caractérisé par le fait qu'avant d'enrober le ruban support (2) dans la masse plastique (6) non transparente à la lumière on enrobe la zone du couplage de la fibre dans un plastique transparent.

10. Procédé selon la revendication 7, caractérisé par le fait qu'avant d'enrober le ruban support (2) dans la masse plastique (6) non transparente à la lumière, on recouvre d'un capotage la zone de couplage de la fibre.
